# EUROPÄISCHE PATENTSCHRIFT

(11) **EP 1 502 147 B1**
(45) Veröffentlichungstag und Bekanntmachung des Hinweises auf die Patenterteilung: **02.07.2008**
(21) Anmeldenummer: 03711780.1
(22) Anmeldetag: 22.04.2003
(51) Int. Cl.: G02B 27/28, C09J 5/00

(54) **VERFAHREN ZUR HERSTELLUNG EINER KEILFREIEN KLEBEFUGE**
METHOD FOR PRODUCING A WEDGE-FREE BONDED JOINT
PROCEDE POUR REALISER UN JOINT DE COLLAGE SANS UTILISER DE COIN

(30) Priorität: 25.04.2002 CH 701022002
(43) Veröffentlichungstag der Anmeldung: 02.02.2005
(73) Patentinhaber: OC Oerlikon Balzers AG, 9496 Balzers (LI)
(72) Erfinder: KUNTNER, Jochen, A-6850 Dornbirn (AT)
(86) Internationale Anmeldenummer: PCT/CH2003/000261
(87) Internationale Veröffentlichungsnummer: WO 2003/091784

(56) Entgegenhaltungen:
- DE-A- 4 414 915
- US-A- 5 683 480
- US-B1- 6 212 014
- US-B1- 6 245 187
- PATENT ABSTRACTS OF JAPAN vol. 2000, no. 10, 17. November 2000 (2000-11-17) & JP 2000 191985 A (SEIKO EPSON CORP), 11. Juli 2000 (2000-07-11)

## Beschreibung

Die Erfindung betrifft ein Verfahren nach Anspruch 1 zur Herstellung eines optischen Bauteils mit keilfreier Klebefuge.

Optische Bauteile mit paralleler Klebefuge werden vielfach beispielsweise im Bereich der abbildenden Optik benötigt. Um eine möglichst fehlerfreie Abbildung zu gewährleisten werden hinsichtlich Winkeltoleranzen sehr eng spezifizierte Einzelkomponenten eingesetzt, deren optische und mechanische Verbindung hohen Anforderungen im Hinblick auf Ausrichtung und Orientierung erfüllen müssen. Insbesondere sind beim Verkleben von planen Oberflächen zweier transparenter Komponenten durch die hindurch die optische Abbildung erfolgen soll undefinierte Klebekeile zu vermeiden. Oftmals erfolgt die Abbildung durch die verbundenen Oberflächen hindurch. Die miteinander verbundenen Oberflächen können daher als unbeschichtete transmittierende Grenzflächen ausgebildet sein. Insbesondere für Strahlteiler lassen sich diese zu verbindenden Oberflächen aber auch beschichten und damit als Grenzflächen mit optischer Funktion ausbilden. Auf diese Weise sind Polarisationsstrahlteiler oder Farbteiler realisierbar. Konkret ist die Anwendung solcher Komponenten unter anderem in Projektoren und Mikroskopen weit verbreitet.

Wie dies aus dem Stand der Technik bekannt ist werden solche Komponenten heute üblicherweise manuell miteinander verklebt. Dabei wird zunächst Klebstoff auf eine der zu verklebenden Flächen an einer oder an mehreren Stellen aufgetragen. Anschließend werden die Flächen zusammengeführt. Hierbei bilden sich in aller Regel Lufteinschlüsse die durch kreisendes Verschieben der Flächen relativ zueinander an den Rand gedrängt werden und schließlich austreten. Dabei ist kaum zu vermeiden, dass Klebstoff über den Rand der zu verklebenden Flächen tritt. Oftmals sind mehrere Korrekturschritte notwendig, um die für die entsprechende optische Anwendung notwendige Präzision zu erreichen. Vor und auch während dem Aushärten des Klebstoffs wird hierzu optisch oder mechanisch getestet, ob ein nicht zulässiger Keil in der Klebefuge vorliegt. Der ganze manuelle Prozess erfordert Geschick und Erfahrung und kann nur durch ausgebildete Fachkräfte durchgeführt werden. Dies macht den Herstellungsprozess teuer und insbesondere für die Massenproduktion unwirtschaftlich und damit ungeeignet.

In der DE 4414915 A1 wird für strukturierte Oberflächen eine alternative Vorgehensweise offenbart. Demzufolge werden die zu verklebenden Oberflächen zunächst aufeinander gelegt. Dadurch sind die Flächen sehr gut parallel zueinander ausgerichtet. Anschließend wird über die Berandung der zu verklebenden Flächen der viskose Klebstoff zugeführt. In mindestens einer der Oberflächen sind hierzu Kanäle vorgesehen. Aufgrund der Kapillarkräfte wird der Klebstoff ins Innere gezogen und verteilt sich über die zu verklebenden Flächen. Durch diese Vorgehensweise wird das nachteilige Kreisen zur Verdrängung von etwaigen Lufteinschlüssen vermieden. Da die beiden Flächen von Anfang an parallel zueinander ausgerichtet sind bedarf es auch keiner weiterer Korrekturschritte. Insbesondere kann dieser Prozess einfach automatisiert werden, wodurch eine wirtschaftliche Massenproduktion möglich wird. Eine große Einschränkung für die Anwendbarkeit eines solchen Klebeprozesses ist allerdings die Tatsache dass es sich bei mindestens einer der zu verklebenden Flächen um eine strukturierte Oberfläche handeln muss, da zwei plane Oberflächen zu dicht aufeinander liegen und ein Eindringen des Klebstoffs mittels Kapillarkräfte unmöglich machen.

Es ist Aufgabe der vorliegenden Erfindung die Nachteile des Standes der Technik zu beseitigen. Es ist insbesondere die Aufgabe, ein automatisiertes Verfahren zum Verkleben zweier planer Flächen anzugeben, mit dem es nicht notwendig ist, die Flächen kreisend gegeneinander zu verschieben und mit dem auch keine Korrekturschritte zur Einstellung der gewünschten Parallelität der zu verklebenden Flächen notwendig sind.

Erfindungsgemäß wird die Aufgabe gelöst durch Vorgehen nach dem Anspruch 1. Die Unteransprüche beziehen sich auf weitere vorteilhafte Ausgestaltungen.

Das Verkleben der planen Flächen umfasst bei erfindungsgemäßem Vorgehen einen Prozessschritt, bei dem auf eine Fläche der Klebstoff in Form eines einfach zusammenhängenden Volumens mittig und vorzugsweise in einem nicht unterbrochenen Arbeitsschritt aufgebracht wird. Das erfindungsgemäße Vorgehen umfasst außerdem nach weitgehender Annäherung der zweiten Fläche an die erste Fläche eine Phase der Anziehung in der im wesentlichen die Schwerkraft und die Kapillarkraft für die Annäherung sorgen.
Durch das kontinuierliche Aufbringen des Klebstoffs wird vermieden, dass sich im Klebstoffvolumen selbst Lufteinschlüsse bilden. Mit der Forderung, dass das Klebevolumen einfach zusammenhängend sein soll werden z.B. Ringe ausgeschlossen, die wiederum der Bildung von Luftblasen förderlich wären. Wird nun dafür gesorgt, dass bei der weitgehenden Annäherung der zweiten Fläche diese parallel zur ersten ausgerichtet ist und bereits beide Flächen mit dem Klebstoff in Kontakt sind, so wird sich in der Phase der Anziehung aufgrund der Kapillarkräfte und eventuell mit Unterstützung der Schwerkraft der Klebstoff über die gesamte Fläche bis zum Rand ausbreiten. Der Klebstoff wird mittig aufgebracht, d.h. er wird so aufgebracht, dass jeder Punkt am Rand der Flächen zumindest angenähert den gleichen Abstand zum Rand des Klebstoffvolumens hat. Das hat zur Folge, dass die Parallelität der Flächen erhalten bleibt, da der Rand des Klebstoffvolumens gleichmäßig in Richtung Rand der zu verklebenden Flächen strebt.
Falls die Schwerkraft einen großen Einfluss auf die Annäherung hat, und der Schwerpunkt des sich absenkenden Körpers sich nicht zumindest angenähert über dem ursprünglichen Klebevolumen befindet, kann dies durch ein am sich absenkenden Körper befestigtes Ausgleichsgewicht korrigiert werden.

Die Erfindung wird anschließend beispielsweise und anhand von schematischen Figuren und Beispielen erläutert. Die Figuren zeigen:
- Fig.1: ein optisches Bauteil mit einer keilfreien Klebefuge im Querschnitt
- Fig.2a: eine kegelförmige Komponente mit auf der kreisrunden planen Fläche aufgebrachtem Klebstoff im Querschnitt.

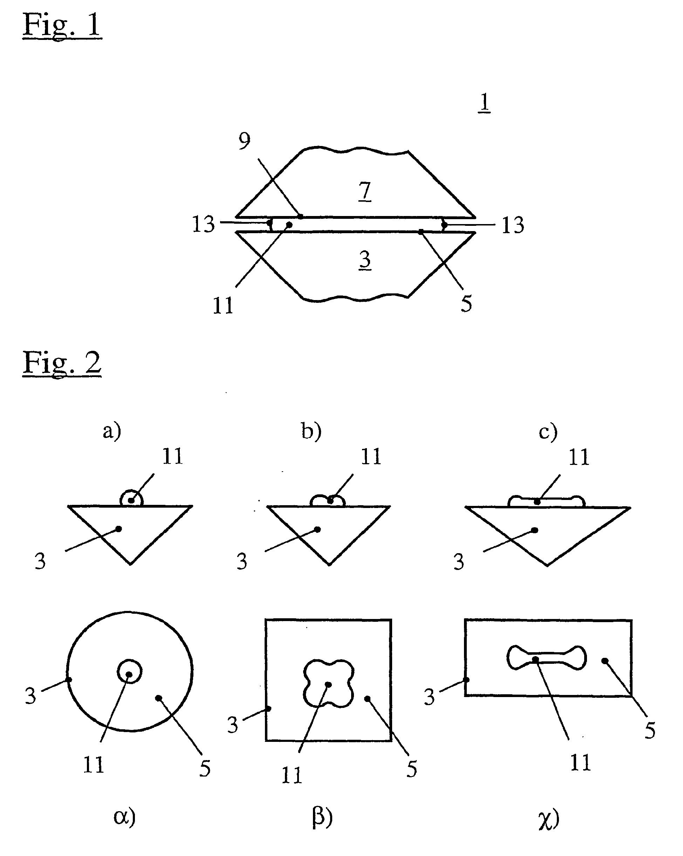

- Fig.2α: eine Draufsicht der kegelförmigen Komponente mit aufgebrachten Klebstoff gemäß Fig.2a.
- Fig.2b: ein Prisma mit auf der quadratischen Hypothenusenfläche erfindungsgemäß aufgebrachtem Klebstoff im Querschnitt.
- Fig.2β: eine Draufsicht des Prismas mit auf der quadratischen Hypothenusenfläche erfindungsgemäß aufgebrachtem Klebstoff gemäß Fig.2b.
- Fig.2c: ein Prisma mit auf der rechteckigen Hypothenusenfläche erfindungsgemäß aufgebrachtem Klebstoff.
- Fig.2χ: eine Draufsicht des Prismas mit auf der rechteckigen Hypothenusenfläche erfindungsgemäß aufgebrachtem Klebstoff gemäß Fig.2c.

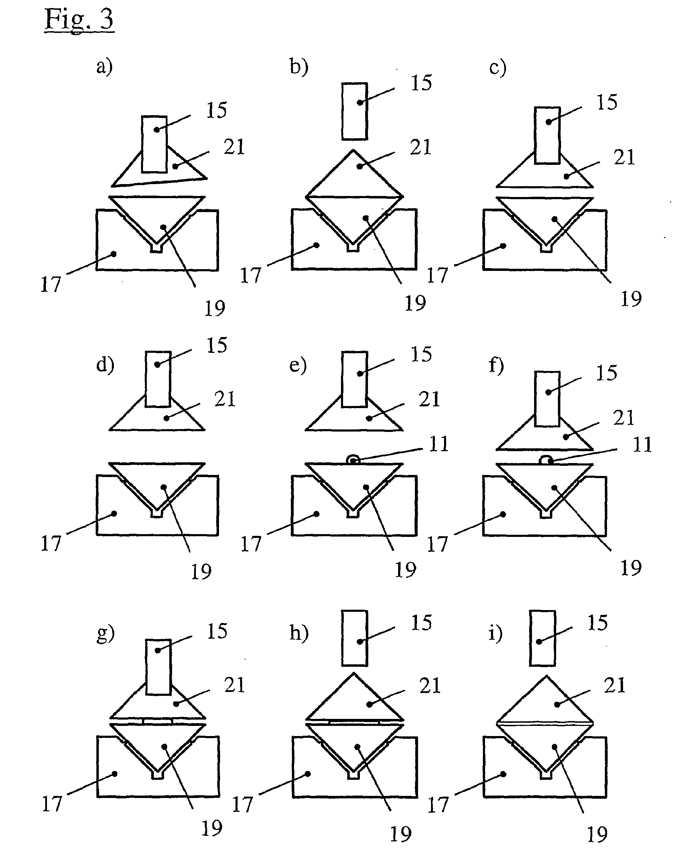

- Fig.3: Schematisch skizzierter Ablauf der erfindungsgemäßen Vorgehensweise zum Verkleben zweier planer Flächen. Weitergehende Erklärungen befinden sich in der Beschreibung.

Im Beispiel soll die Verklebung zweier Glasprismen, das heißt ein erstes Prisma 19 und ein zweites Prisma 21, wobei die Grundflächen der Prismen im Beispiel rechtwinklige Dreiecke bilden deren Katheten gleich lang sind wie die Prismen hoch, so dass beim Verkleben der Hypothenusenflächen ein Würfel entsteht. Ist eine der Hypothenusenflächen mit einem polarisationsteilenden Schichtsystem beschichtet, so entsteht ein Polarisationsstrahlteiler.
Vorbereitend zur parallelen Ausrichtung der zu verklebenden Flächen werden nun folgende Schritte ausgeführt, die in den Figuren 3a bis 3d dargestellt sind:
i) Die beschichtete Hypothenusenfläche wird sehr genau zur unbeschichteten Hypothenusenfläche ausgerichtet, indem das zweite Prisma 21 auf das erste Prisma 19 abgesetzt wird, wie in der Figur 3a und 3b dargestellt.
ii) Das zweite Prisma 21 wird nun mittels eines Greifers 15 gegriffen und senkrecht vom ersten Prisma 19 in einem ersten Bewegungsabschnitt bis zu einer ersten Abhebeposition abgehoben, wobei die Orientierung des zweiten Prismas 21 beibehalten wird, wie gezeigt in der Figur 3c.
iii) Anschließend wird das zweite Prisma 21 in einem zweiten Bewegungsabschnitt zu einer ersten Position überführt, die Startposition ist für die nach Aufbringen des Klebstoffs 11 vorgesehene Annäherung des zweiten Prismas an das erste Prisma, wie dargestellt in der Figur 3d.

Dabei ist klar dass zur Positionierung des ersten Prismas 19 zum Beispiel ein Komponentenhalter 17 verwendet werden kann.

Im nächsten Schritt wird nun auf das erste Prisma 19 der Klebstoff 11 mittig aufgetragen. Dies ist in der Figur 3e dargestellt. Die Form des aufgebrachten Klebstoffs hat dabei Einfluss auf das Verteilungsverhalten. Sollen, wie im Beispiel rechteckige Flächen verklebt werden, so ist es vorteilhaft, eine Linie parallel zur längeren Seite des Rechtecks aufzutragen. Würde diese Linie quer über die gesamte Fläche verlaufen, so müsste sie in ihrer Dicke homogen sein, um ein gleichmäßiges Ausbreiten zu gewährleisten. Versuche haben ergeben, dass es vorteilhaft ist die Linie jeweils in einem Abstand von der kürzeren Seite des Rechtecks enden zu lassen, der ungefähr einem Viertel der Länge der kürzeren Seite des Rechtecks entspricht. Ausserdem ist es von Vorteil, an den Enden der Linie jeweils etwas mehr Klebstoff aufzutragen. Dadurch entsteht eine hantelförmige Geometrie wie in den Figuren 2c und 2χ dargestellt. Sollen kreisrunde Flächen verkittet werden, so genügt ein rotationssymmetrischer Tropfen im Mittelpunkt des Kreises, wie in den Figuren 2a und 2α dargestellt. Liegen quadratische Grundflächen vor, so ist eine Klebstoffgeometrie ratsam die vier miteinander verschmolzenen Volumina entspricht wie in den Figuren 2b und 2β dargestellt. Die Form entspricht hier vier überlappenden, in einem Quadrat angeordneten Tropfen, die alle die Mitte der zu verklebenden Fläche bedecken.
Die Gesamtmenge des aufgebrachten Klebstoffes bestimmt letztlich die Dicke der Klebefuge. Wenn die zu verklebenden Flächen beispielsweise einen Inhalt von je 10 cm² und die Klebefuge am Ende 10 µm dick sein soll, so wird ein Klebstoffvolumen von 10 mm³ benötigt. Bei einer zu gering aufgetragenen Klebstoffmenge ist allerdings die Gefahr gegeben, dass die Kapillarkräfte nicht ausreichen um die Flächen vollständig zu benetzen. Zu viel aufgetragener Klebstoff kann bedeuten, dass Klebstoff über den Rand der zu verklebenden Flächen tritt. Die Erfahrung zeigt, dass Klebstoffmengen, die zu einer Dicke der Klebefuge von 1 µm bis 50 µm führen, geeignet sind. Dies hängt natürlich stark von den Eigenschaften des verwendeten Klebstoffs ab.

Nach Aufbringen des Klebstoffs wird das zweite Prisma 21 von der ersten Position aus an das erste Prisma 19 angenähert. Dies geschieht in drei Phasen: Die Phase der Gegenüberstellung, die intermediäre Phase und die Phase der Anziehung.
In der Phase der Gegenüberstellung wird die Hypothenusenfläche des zweiten Prismas 21 von der ersten Position aus in eine erste Zwischenposition gebracht, in der die Hypothenusenfläche des zweiten Prismas 21 derart positioniert ist, dass sich die beiden Hypothenusenflächen in einem ersten Abstand parallel ausgerichtet und lateral angenähert ausgerichtet gegenüberstehen. Die Hypothenusenfläche des zweiten Prismas 21 hat in der ersten Zwischenposition noch keinen Kontakt mit dem Klebstoff. Daher kann die Annäherung in der Phase der Gegenüberstellung sehr schnell erfolgen. Da die folgenden Phasen der Annäherung viel langsamer erfolgen müssen, ist es von Vorteil den ersten Abstand kleiner als 1mm zu wählen. Die Höhe des aufgetragenen Klebstoffes übersteigt selten 0.3 mm. Vorzugsweise wird daher ein erster Abstand gewählt der 0.5 mm entspricht. Diese schnelle Annäherung auf diesen kleinen Abstand ist insbesondere deswegen möglich, weil im Vorbereitungsschritt die beiden Hypothenusenflächen sehr genau zueinander parallel ausgerichtet wurden.
Die Abstände können sich ändern, wenn der Klebstoff durch zum Beispiel elektrostatische Kräfte zusätzlich vom zweiten Prisma 21 angezogen wird, das Grundprinzip bleibt jedoch dasselbe.
In der intermediären Phase der Annäherung wird die Hypothenusenfläche des zweiten Prismas 21 von der ersten Zwischenposition ausgehend in eine zweite Zwischenposition mit einem zweiten Abstand von der Hypothenusenfläche des ersten Prismas 19 überführt. Dies ist in den Figuren 3f bis 3h dargestellt. In dieser zweiten Zwischenposition ist die Hypothenusenfläche des zweiten Prismas 19 bereits teilweise mit Klebstoff benetzt, d.h. beim Übergang von der ersten Zwischenposition in die zweite Zwischenposition wird die Hypothenusenfläche des zweiten Prismas 21 vom Klebstoff kontaktiert. Findet diese Kontaktaufnahme, dargestellt in der Figur 3g, zu schnell statt, so bilden sich häufig Luftblasen im Klebstoff, die nicht mehr herauszulösen sind. Dies kann verhindert werden, wenn die mittlere Geschwindigkeit der Annäherung in der intermediären Phase langsam genug gewählt wird, wenn diese also kleiner als z. B. 0.1 mm/s beträgt. Je langsamer diese mittlere Geschwindigkeit ist, umso länger dauert der Prozess. Mittlere Geschwindigkeiten in der intermediären Phase die unterhalb 0.001 mm/s liegen sind daher unwirtschaftlich. Vorzugsweise wird die intermediäre Phase daher mit einem Geschwindigkeitsprofil gefahren. Dabei wird, sobald der freie Spalt zwischen den Begrenzungsflächen des Klebstoffs 11 und der Hypothenusenfläche des zweiten Prismas 21 0.01 mm beträgt, die mittlere Geschwindigkeit auf Werte kleiner oder gleich 0.04 mm/s, vorzugsweise 0.025 mm/s gedrosselt.
Die zweite Zwischenposition wird typischerweise so gewählt dass in dieser Position die zu verklebenden Flächen zu 70% mit Klebstoff benetzt sind, wie die Figur 3h zeigt.
In der nun folgenden Phase der Anziehung wird der Greifer 15 geöffnet und entfernt, wie die Figur 3h ebenfalls zeigt. Aufgrund der nun wirkenden Kapillarkräfte und eventuell der Schwerkraft verteilt, sich nun der Klebstoff über den gesamten Bereich der zu verklebenden Flächen. Aufgrund der Ausgangsgeometrie des aufgebrachten Klebstoffs findet die Ausbreitung nach allen Seiten gleichmäßig statt. Daher bleibt die Parallelität der Hypothenusenflächen sehr gut erhalten, während das zweite Prisma 21 sich auf das erste Prisma 19 absenkt. Dieser Ausbreitungsprozess kommt zum Stillstand, sobald der Klebstoff den Prismenrand erreicht hat.
In einem letzten Schritt muss nun der Klebstoff 11 ausgehärtet werden. Für optische Anwendungen, insbesondere wenn Licht durch die verklebten Flächen transmittiert werden soll, werden optische Kleber eingesetzt. Dabei gibt es Zweikomponentenkleber die mit der Zeit selbsthärtend sind. Sind jedoch die zu verklebenden Komponenten aus einem Material, das zumindest teilweise für UV-Licht transparent ist, so ist der Einsatz eines UV-härtenden Klebstoffs von Vorteil.

Im Beispiel ist eine Hypothenusenfläche mit einem polarisationsteilenden Schichtsystem beschichtet. Es lässt sich aber natürlich ein beliebiges optisch funktionelles Schichtsystem bestehend aus mindestens einer Schicht aufbringen. Neben Polarisationsstrahlteilern sind daher auch Farbfilter oder Beugungsstrukturen oder eine Kombination aus diesen Elementen aufbringbar. Insbesondere können beide zu verklebenden Flächen eine optisch funktionelle Schicht tragen, deren Verhalten sich nach verkleben zu einer optischen Summenfunktion addieren.

## Patentansprüche

1. Verfahren zur Herstellung eines optischen Bauteils (1) mit einer ersten Komponente (3) und einer zweiten Komponente (7), mit folgenden Schritten:
a) Vorsehen einer ersten zu verklebenden planen Fläche (5) an der ersten Komponente (3) und einer zweiten zu verklebenden planen Fläche (9) an der zweite Komponente (7);
b) klebstofffreies Aufsetzen der zweiten Komponente (7) auf die erste Komponente (3), so dass eine dem Aufeinanderliegen der Flächen (5,9) entsprechende Ausrichtung der zu verklebenden Flächen (5,9) zueinander erzielt wird;
c) Abheben der zweiten Komponente (7) mit einem Greifer unter Beibehaltung der Ausrichtung;
d) Aufbringen von Klebstoff (11) auf eine der zu verklebenden Flächen (5,9) in Form eines einfach zusammenhängenden, mittig aufgebrachten Volumens;
e) Annähern der zweiten Komponente (7) an die erste Komponente (3) in mindestens zwei Phasen, wobei in der ersten Phase das Annähern die vorgängig erzielte Ausrichtung beibehält oder gegebenenfalls eine Phase der Wiederherstellung der vorgängig erzielten Ausrichtung umfasst und wobei die letzte Phase eintritt, nachdem bereits beide Flächen mit dem Klebstoff in Kontakt sind und wobei der Greifer entfernt wird, so dass durch Kapillarkräfte und eventuell durch Schwerkraft die beiden Komponenten weiter angenähert werden, wodurch die Verklebung ermöglicht wird.

2. Verfahren nach Anspruch 1, **dadurch gekennzeichnet, dass** die Ausrichtung als keilfreie Ausrichtung der planen Flächen realisiert wird.

3. Verfahren nach einem der Ansprüche 1 bis 2, **dadurch gekennzeichnet, dass** das Annähern der zweiten Komponente (7) an die erste Komponente (3) eine Phase der Gegenüberstellung umfasst in der in einer ersten Zwischenposition der Klebstoff lediglich mit einer der beiden zu verklebenden Flächen (5,9) in Kontakt ist, während er in einer zweiten Zwischenposition mit beiden Flächen in Kontakt ist und beim Übergang von der erster zwischenposition in die zweite Zwischenposition die mittlere Geschwindigkeit der Annäherung so langsam gewählt ist, dass sich insbesondere bei der Kontaktaufnahme des Klebstoffs (11) mit der noch nicht kontaktierten der beiden zu verklebenden Flächen (5,9) keine Störzentren, insbesondere Luftblasen im Klebstoff (11) bilden oder bestehen bleiben.

4. Verfahren nach Anspruch 3 **dadurch gekennzeichnet, dass** besagte mittlere Geschwindigkeit der zweiten Komponente relativ zu ersten Komponente zwischen 0.001 mm/s und 0.1 mm/s liegt wobei die mittlere Geschwindigkeit im Bereich von 0.01 mm um den Abstand herum bei dem der Klebstoff (11) mit beiden zu verklebenden Flächen in Kontakt tritt, kleiner 0.04 mm/s ist und vorzugsweise 0.025 mm/s beträgt.

5. Verfahren nach einem der Ansprüche 3 und 4 **dadurch gekennzeichnet, dass** der erste Abstand der zweiten zu verklebenden Fläche (9) von der ersten zu verklebenden Fläche (5) in der ersten Zwischenposition kleiner 1 mm ist und vorzugsweise im wesentlichen 0.5 mm beträgt.

6. Verfahren nach einem der Ansprüche 2 bis 5 **dadurch gekennzeichnet, dass** während oder nach der Phase der Anziehung die laterale Ausrichtung der beiden verklebenden Flächen (5,9) relativ zueinander korrigiert wird.

7. Verfahren nach einem der Ansprüche 2 bis 6 bei dem zwei plane Flächen (5, 9) gleicher Geometrie verklebt werden, **dadurch gekennzeichnet, dass** beim Aufbringen des Klebstoffes (11) dessen Form und Volumen den zu verklebenden planen Flächen (5,9) so angepasst wird, dass nach Beendigung der Phase der Anziehung die zu verklebenden planen Flächen (5,9) im wesentlichen ganz mit Klebstoff (11) benetzt sind, ohne dass der Klebstoff (11) über die begrenzenden Ränder der zu verklebenden planen Flächen (5,9) tritt.

8. Verfahren nach Anspruch 7, **dadurch gekennzeichnet, dass** der Klebstoff (11) in der Mitte einer der planen Flächen (5,9) in der Form eines rotationssymmetrischen Tropfens aufgebracht wird.

9. Verfahren nach Anspruch 7, **dadurch gekennzeichnet, dass** der Klebstoff in der Form von vier überlappenden in einem Quadrat angeordneten Tropfen, die alle die Mitte einer der zu verklebenden planen Flächen (5,9) bedecken, aufgebracht wird.

10. Verfahren nach Anspruch 7, **dadurch gekennzeichnet, dass** der Klebstoff (11) in Form einer geraden Linie in der Mitte und längs der längeren Rechteckseite aufgebracht wird wobei die Linie jeweils in einem Abstand von der kürzeren Rechteckseite endet, der im wesentlichen einem Viertel der Länge der kürzeren Rechteckseite entspricht und die Dicke der Klebelinie vorzugsweise zu den Enden der Klebelinie hin entsprechend der Form einer Hantel zunimmt.

11. Verfahren nach einem der Ansprüche 1 bis 10 zur Herstellung eines optischen Bauteils, **dadurch gekennzeichnet, dass** die erste Komponente (3) und die zweite Komponente (7) aus transparentem Material, insbesondere aus Glas angefertigt werden und zum Verkleben ein Klebstoff (11) eingesetzt wird, der ein optischer Klebstoff ist, vorzugsweise einen UV-härtenden Klebstoff umfasst.

12. Verfahren nach Anspruch 11 zur Herstellung eines optischen Bauteils, **dadurch gekennzeichnet, dass** mindestens eine der zu verklebenden planen Flächen (5,9) mit einem optisch funktionellen Schichtsystem bestehend aus mindestens einer Schicht, versehen wird.

13. Verfahren nach Anspruch 12, **dadurch gekennzeichnet, dass** das optisch funktionelle Schichtsystem ein optisches Element entsprechend einem Farbfilter, einem Strahlteiler, insbesondere einem Polarisationsstrahlteiler, einer Beugungsstruktur oder einer Kombination zweier oder mehrerer der besagten optischen Elemente bildet.

14. Verfahren nach einem der Ansprüche 1 bis 13, **dadurch gekennzeichnet, dass** die erste Komponente ein Prisma mit einem rechtwinkligen Dreieck als Grundfläche ist und die zweite Komponente ebenfalls ein Prisma mit einer dem ersten Prisma entsprechenden Geometrie ist und die Prismen an den Hypotenusenflächen zu einem Quader, gegebenenfalls zu einem Würfel verkittet werden.

## Claims

1. Method for production of an optical element (1) with a first component (3) and a second component (7) with the following steps:
a) provision of a first planar surface (5) to be bonded on the first component (3) and a second planar surface (9) to be bonded on the second component (7);
b) adhesive-free application of the second component (7) on the first component (3) so that a mutual alignment of the surfaces (5, 7) to be bonded corresponding to superposition of the surfaces (5, 7) is achieved;
c) lifting of the second component (7) with a gripper while retaining the alignment;
d) application of the adhesive (11) to one of the surfaces (5, 9) to be bonded in the form of a simply cohesive, centrally applied volume;
e) approach of the second component (7) to the first component (3) in at least two phases, in the first phase the approach retaining the alignment previously achieved or where applicable comprising a phase of recreation of the alignment previously achieved, and the last phase beginning after both surfaces are already in contact with the adhesive and the gripper is removed, so that the two components are brought closer together by capillary forces and where applicable by gravity, thus enabling bonding.

2. Method according to claim 1, **characterised in that** the alignment is achieved as a wedge-free alignment of planar surfaces.

3. Method according to one of claims 1 or 2, **characterised in that** the approach of the second component (7) to the first component (3) comprises a phase of opposition in which, in a first intermediate position, the adhesive is in contact only with one of the two surfaces (5, 9) to be bonded, while in a second intermediate position it is in contact with both surfaces, and on transition from the first intermediate position to the second intermediate position the mean speed of approach is selected so slow that, in particular when the adhesive (11) makes contact with the two surfaces (5, 9) to be bonded which are not yet in contact, no centres of disruption, in particular air bubbles, form or remain in the adhesive (11).

4. Method according to claim 3, **characterised in that** said mean speed of the second component relative to the first component is between 0.001 mm/s and 0.1 mm/s, wherein the mean speed in the range of 0.01 mm about the distance at which the adhesive (11) makes contact with the two surfaces to be bonded, is less than 0.04 mm/s and preferably is 0.025 mm/s.

5. Method according to one of claims 3 or 4, **characterised in that** the first distance of the second surface (5) to be bonded from the first surface (5) to be bonded in the first intermediate position is less than 1 mm and preferably is substantially 0.5 mm.

6. Method according to any of claims 2 to 5, **characterised in that** the lateral alignment of the two surfaces (5, 9) to be bonded relative to each other is corrected during or after the phase of attraction.

7. Method according to any of claims 2 to 6, in which two planar surfaces (5, 9) of the same geometry are bonded, **characterised in that** on application of the adhesive (11), the form and volume of which are adapted to the planar surfaces (5, 9) to be bonded, such that after termination of the attraction phase, the planar surfaces (5, 9) to be bonded are substantially totally wetted with adhesive (11) without the adhesive (11) spreading over the limiting edges of the planar surfaces (5, 9) to be bonded.

8. Method according to claim 7, **characterised in that** the adhesive (11) is applied in the centre of one of the two planar surfaces (5, 9) to be bonded in the form of a rotationally symmetrical droplet.

9. Method according to claim 7, **characterised in that** the adhesive (11) is applied in the form of four overlapping droplets arranged in a square which all cover the centre of one of the two planar surfaces (5, 9) to be bonded.

10. Method according to claim 7, **characterised in that** the adhesive (11) is applied in the form of a straight line in the centre and along the long rectangle side, wherein the line ends at a distance from the short rectangle side which substantially corresponds to one-quarter of the length of the short rectangle side, and the thickness of the adhesive line preferably increases towards the end of the adhesive line in the shape of a dumbbell.

11. Method according to any of claims 1 to 10 for production of an optical element, **characterised in that** the first component (3) and the second component (7) are made of transparent material in particular glass, and for bonding an adhesive (11) is used which is an optical adhesive, preferably a UV-hardening adhesive.

12. Method according to claim 11 for production of an optical element, **characterised in that** at least one of the planar surfaces (5, 9) to be bonded is fitted with an optically functional layer system comprising at least one layer.

13. Method according to claim 12, **characterised in that** the optically functioning layer system forms an optical element corresponding to a colour filter, a beam splitter, in particular a polarising beam splitter, a refraction structure or a combination of two or more of said optical elements.

14. Method according to any of claims 1 to 13, **characterised in that** the first component is a prism with a right-angled triangle as a base surface and the second component is also a prism with geometry corresponding to the first prism, and the prisms are cemented at the hypotenuse surfaces into a cuboid, where applicable a cube.

## Revendications

1. Procédé de fabrication d'un composant (1) optique avec une première composante (3) et une seconde composante (7), avec les étapes suivantes :
a) prévoir une première surface (5) plane à coller sur la première composante (3) et une seconde surface (9) plane à coller sur la seconde composante (7) ;
b) disposer sans adhésif la seconde composante (7) sur la première composante (3) de sorte à obtenir un alignement des surfaces (5, 9) à coller les unes par rapport aux autres qui correspondent à la superposition des surfaces (5, 9) les unes aux autres.
c) soulever la seconde composante (7) à l'aide d'une griffe tout en conservant l'alignement ;
d) appliquer l'adhésif (11) sur une des surfaces (5, 9) à coller sous forme d'un volume disposé centralement et simplement aggloméré.
e) rapprocher la seconde composante (7) de la première composante (3) au moins en deux phases, dans la première phase le rapprochement conservant l'alignement obtenu précédemment ou si nécessaire une phase comprenant le rétablissement de l'alignement obtenu précédemment et la dernière phase se produisant après que les deux surfaces ont déjà été en contact avec l'adhésif et la griffe a été écartée de sorte que les deux composantes se rapprochent davantage par des forces capillaires ou éventuellement par la gravité, ce qui permet le collage.

2. Procédé selon la revendication 1, **caractérisé en ce que** l'alignement est réalisé en tant qu'alignement sans coin des surfaces planes.

3. Procédé selon l'une quelconque des revendications 1 à 2 ; **caractérisé en ce que** le rapprochement des deux composantes (7) de la première composante (3) comprend une phase de juxtaposition durant laquelle dans une première position intermédiaire l'adhésif est uniquement en contact avec une des deux surfaces (5, 9) à coller, pendant qu'il est en contact avec les deux surfaces dans une seconde position intermédiaire et lors du passage entre la première position intermédiaire et la seconde position intermédiaire la vitesse moyenne du rapprochement soit si lente qu'aucun défaut de structure ne se forme ou ne subsiste en particulier lors de la mise en contact de l'adhésif (11) avec l'une des deux surfaces (5, 9) qui n'est pas encore en contact.

4. Procédé selon la revendication 3, **caractérisé en ce que** ladite vitesse moyenne de la seconde composante par rapport à la première composante se situe entre 0,001 mm/s et 0,1 mm/s, la vitesse moyenne dans la plage de 0,01 mm autour de l'espacement au niveau duquel l'adhésif (11) entre en contact avec les deux surfaces à coller, est inférieure à 0,04 mm/s et s'élève de préférence à 0,025 mm/s.

5. Procédé selon l'une quelconque des revendications 3 et 4, **caractérisé en ce que** le premier espacement de la seconde surface (9) à coller par rapport à la première surface (5) à coller est inférieur à 1mm et s'élève de préférence essentiellement à 0,5 mm dans la première position intermédiaire.

6. Procédé selon l'une quelconque des revendications 2 à 5, **caractérisé en ce que** pendant ou après la phase de serrage l'alignement latéral des deux surfaces (5, 9) à coller est corrigé l'une par rapport à l'autre.

7. Procédé selon l'une quelconque des revendications 2 à 6, lors duquel deux surfaces (5, 9) planes de même dimension sont collées, **caractérisé en ce que** lors de l'application de l'adhésif (11) dont la forme et le volume sont adaptés aux surfaces (5, 9) planes à coller de manière telle qu'après la fin de la phase de serrage les surfaces (5, 9) planes à coller sont complètement humidifiées par l'adhésif (11), sans que l'adhésif (11) ne pénètre sur les bords de limite des surfaces (5, 9) planes à coller.

8. Procédé selon la revendication 7, **caractérisé en ce que** l'adhésif (11) est appliqué au milieu d'une des surfaces (5, 9) planes sous la forme d'une goutte à symétrie de rotation.

9. Procédé selon la revendication 7, **caractérisé en ce que** l'adhésif (11) est appliqué sous la forme de quatre gouttes qui sont superposées dans un carré, qui toutes ensemble recouvrent le centre d'une des surfaces (5, 9) planes à coller.

10. Procédé selon la revendication 7, **caractérisé en ce que** l'adhésif (11) est appliqué sous forme d'une ligne droite au centre et le long du plus long côté du rectangle, la ligne se terminant dans un espacement du côté du rectangle plus court, qui correspond essentiellement à un quart de la longueur du côté du rectangle plus court et l'épaisseur de la ligne de collage augmente de préférence vers les extrémités de la ligne de collage qui prend ainsi la forme d'une haltère.

11. Procédé selon l'une quelconque des revendications 1 à 10, pour la fabrication d'un composant optique, **caractérisé en ce que** la première composante (3) et la seconde composante (7) sont fabriquées en un matériau transparent, en particulier en verre et un adhésif (11) qui est un adhésif optique, est inséré pour coller, comprenant de préférence un adhésif durcissant à chaud.

12. Procédé selon la revendication 11 pour la fabrication d'un composant optique, **caractérisé en ce qu'**au moins une des surfaces (5, 9) planes à coller est pourvue d'un système de couche fonctionnelle optique comprenant au moins une couche.

13. Procédé selon la revendication 12, **caractérisé en ce que** le système de couche fonctionnel optique forme un élément optique en fonction d'un filtre coloré, un séparateur de faisceaux, en particulier un séparateur de faisceaux de polarisation, une structure de diffraction ou une combinaison de deux ou plusieurs desdits éléments optiques.

14. Procédé selon l'une quelconque des revendications 1 à 13, **caractérisé en ce que** la première composante est un prisme avec un triangle rectangle en tant que surface de base, et la seconde composante est également un prisme dont la forme correspond à celle du premier prisme et les prismes sont fixés avec du mastic sur les surfaces de l'hypoténuse d'un carré, si nécessaire d'un cube.
